# EUROPÄISCHE PATENTSCHRIFT

(11) **EP 0 816 049 B1**
(45) Veröffentlichungstag und Bekanntmachung des Hinweises auf die Patenterteilung: **11.04.2001**
(21) Anmeldenummer: 97110737.0
(22) Anmeldetag: 01.07.1997
(51) Int. Cl.: B29C 47/52

(54) **Verfahren zur Extrusion von Kautschukmischungen und Kunststoffen und Zahnradextruder**
Gear-pump extruder and method for extruding elastomers and plastics
Extrudeuse à pompe à engrenages et méthode d'extrusion de matières plastiques et élastomères

(30) Priorität: 05.07.1996 DE 19627081; 20.11.1996 DE 19647904
(43) Veröffentlichungstag der Anmeldung: 07.01.1998
(73) Patentinhaber: Paul Troester Maschinenfabrik, D-30519 Hannover (DE)
(72) Erfinder: Rüger, Wolfgang, Ing., 31061 Alfeld-Leine (DE)
(74) Vertreter: Junius, Walther, Dr.

(56) Entgegenhaltungen:
- EP-A- 0 062 017
- DE-A- 1 504 122
- DE-A- 2 434 795
- DE-A- 3 224 800
- DE-C- 345 406
- PATENT ABSTRACTS OF JAPAN vol. 007, no. 230 (M-249), 12.Oktober 1983 & JP 58 122385 A (KOBE SEIKOSHO KK), 21.Juli 1983,

## Beschreibung

Die Erfindung betrifft ein Verfahren zur Extrusion von Kautschukmischungen und Kunststoffen, mittels eines Zahnradextruders, bestehend aus einem Gehäuse, in welchem ein Paar von miteinander kämmenden Zahnrädern untergebracht ist, das mit einem Einzugskanal und einem Extrusionskanal versehen ist und dem zwei Einzugswalzen zugeordnet sind, sowie einen Zahnradextruder zur Durchführung dieses Verfahrens.

Ein solcher Zahnradextruder ist durch die DE-C-345 406 bekannt geworden. Dem miteinander kämmenden Zahnradpaar ist im Gehäuse eine Art Vorratsraum vorgelagert, in welchen die weitab vom Zahnradpaar angeordneten Einzugswalzen das zu verarbeitende Gut hineinfördern, so daß vor den Zahnrädern immer ein Vorrat von zu verarbeitendem Gut bereit liegt, um von den Zähnen der Zahnräder erfaßt und in den Bearbeitungsvorgang mitgeschleppt zu werden. Dabei ist vor dem Zahnradpaar eine Teilvorrichtung angeordnet, die den Vorrat in zwei Teile teilt und jedem Zahnrad einen Teil zuordnet. Allerdings ist der genannte Erfassungsvorgang durch die Zähne der Zahnräder um so schlechter, je steifer und hochviskoser das zu verarbeitende Material ist. Denn steifes und hochviskoses Material schiebt sich selbst dann, wenn es von den Einzugswalzen im Vorraum vor dem Zahnradpaar unter erheblichen Druck gesetzt wird, nur zögerlich durch den Schlagkreis der Zähne der sich kämmenden Zahnräder, so daß in den Zahnlücken an deren Grund Luft bleibt, die sich beim Extrusionsprozeß in das Extrudat mischt und hier höchst unerwünscht ist.

Aus der EP 00 62 017 A ist eine Zahnradpumpe für die Extrusion von elastomerischem Material bekannt geworden, bei der dieses Material in zwei Streifen zugeführt wird. Jeder Streifen wird von den Zähnen eines der beiden Zahnräder ergriffen und durch das Zusammenwirken der beiden Zahnräder plastifiziert. Eine Einzugshilfe in form von Einzugswalzen, wie sie bei unaufgeschlossenem Kautschuk notwendig ist, ist bei dieser Zahnradpumpe nicht vorgesehen.

Die Erfindung vermeidet die Nachteile des Standes der Technik. Es ist die Aufgabe der Erfindung, mit einfachen Mitteln und in einfacher Weise den Materialeinzug zu verbessern und die Zahnlücken mit zu extrudierendem Material besser zu füllen und dadurch das Ein- und Mitschleppen von Lufteinschlüssen zu verringern.

Die Erfindung besteht darin, daß man jedem Zahnrad je einen Einzugskanal und eine Einzugswalze zuordnet, daß man die Einzugswalzen unmittelbar neben dem Zahnrad und vor der Stelle anordnet, an der die Zähne der Zahnräder entlang der Gehäuseinnenwand laufen, und daß man das zu verarbeitende Gut mittels der Einzugswalzen in die Zahnlücken der Zahnräder einpreßt.

Hierdurch arbeitet man intensiver, extrudiert ein besser plastifiziertes Gut und erhält einen erhöhten Durchsatz an Extrudat, das wegen geringerer eingeschlossener Luftmengen von höherer Qualität ist.

Ein weiterer Vorteil dieses Verfahrens besteht darin, daß sich vor dem Aggregat Zahnrad- Einzugswalze jeweils ein Wulst ähnlich dem vor einem Kalanderspalt bildet, wobei es vorteilhaft ist, daß man zur Erzielung eines in sich beweglichen Materialwulstes vor dem Einzugsspalt des Zahnrades die Einzugswalze mit einer anderen Umfangsgeschwindigkeit als das Zahnrad laufen läßt.

Zur Durchführung des Verfahrens kann man den erfindungsgemäßen Zahnradextruder verwenden, der sich dadurch auszeichnet, daß jedem Zahnrad eine Einzugswalze zugeordnet und unmittelbar so nah neben diesem Zahnrad angeordnet ist, daß das zu verarbeitende Gut unter Verringerung des Mitschleppens von Luft in die Zahnlücken der Zahnräder eingepreßt wird, wobei die Einzugswalzen vor der Stelle angeordnet sind, an der die Zähne der Zahnräder entlang der Gehäuseinnenwand laufen.

Bei diesem Zahnradextruder ist es von besonderem Vorteil wenn die Oberflächen der Einzugswalzen glatt oder schwach angerauht sind. Denn dann können die Einzugswalzen die Zahnlücken der Zahnräder voll füllen, was nicht möglich wäre, wenn die Einzugswalzen ebenfalls eine Verzahnung trügen.

Weiter ist es bei diesem Zahnradextruder von Vorteil, wenn an der Oberfläche der Einzugswalzen ein Abstreifer anliegt, der eine mehrmalige Mitnahme des zu extrudierenden Materials verhindert und somit dafür Sorge trägt, daß die Verweildauer für alle zu extrudierenden Materialteile im Extruder nur kurz und gleich lang ist.

Die Einzugswalzen benötigen in vielen Fällen, d.h. zur Verarbeitung bestimmter Kautschukmischungen oder Kunststoffe keinen gesonderten Antrieb. Ein gesonderter Antrieb für die Einzugswalzen, der für die Verarbeitung bestimmter Mischungen erforderlich ist, hat aber selbst dort, wo er nicht erforderlich ist, Vorteile. Denn durch ihn läßt sich eine Wulstbildung des zu verarbeitenden Materiales vor der Einzugsstelle erreichen, die zu einer besseren Durchmischung bereits vor dem Einzug des zu verarbeitenden Materiales in die Zahnlücken und zu einer für den Verfahrensablauf wichtigen Vorplastifizierung führt, durch die auch die Zahnlücken besser gefüllt werden.

Dabei kann es zweckmäßig sein, wenn die Einzugswalzen in Ausnehmungen des Gehäuses angeordnet sind.

Unter unmittelbarer Zuordnung ist hier verstanden, daß die Einzugswalzen in unmittelbarer Nähe der ihnen zugeordneten Zahnräder angeordnet sind.

Während bei der DE 345 406 das Einzugswalzenpaar einen einzigen Materialstreifen in den Einzugskanal einpreßt und mittels des schneidenförmigen Strangteilers in zwei Teilstränge aufteilt, die einzeln jedem der beiden Zahnräder zugeführt werden, das Einzugswalzenpaar somit ein Aggregat für sich bildet, ist bei der Erfindung durch die unmittelbare Zuordnung jeder der beiden Einzugswalzen zu je einem der beiden Zahnräder erreicht, daß die Einzugswalzen das zu extrudierende Material unmittelbar in die Zahnlücken einpressen und diese somit vollkommener füllen. Hierbei arbeiten jeweils ein Zahnrad und eine Speisewalze in Kombination zusammen. Hierdurch gelingt es in einfacher Weise, die Zahnlücken besser mit zu extrudierendem Material zu füllen und das Mitschleppen von Luft zu verringern. Bei diesem Zusammenarbeiten von Speisewalze und Zahnrad tritt eine Wulstbildung auf, wie man sie in ähnlicher Form vor einem Kalanderspalt kennt. Durch diese Wulstbildung findet hier an dieser Stelle eine Vorplastifizierung und eine weitere Durchmischung statt. Ohne zusätzlichen maschinellen Aufwand wird somit eine bessere Durchmischung des zu verarbeitenden Materiales und die genannte Vorplastifizierung erreicht, die auch zu einer verbesserten Füllung der Zahnlücken führt. Die Wulstbildung ist mischungsabhängig, kann aber durch Verschiebung der Einzugswalze beeinflußt werden.

Das als Paar zusammenarbeitende Einzugswalzenpaar des Zahnradextruders der DE 345 406 dient somit lediglich der Spaltung des zugeführten einen einzigen Materialstreifens in zwei Teilstreifen und der Füllung des Zuführungskanales. Jede der beiden einzeln mit dem zugeordneten Zahnrad in Kombination zusammenarbeitende Einzugswalzen dient der Füllung der Zahnlücken, wie sie sich mit dem Einzugswalzenpaar des Zahnradextruders der DE 345 406 nicht erreichen läßt.

Der auf diese Weise erreichte höhere Füllungsgrad der Zahnlücken erhöht die Produktivität. Diese Möglichkeit der verbesserten Füllung der Zahnlücken läßt auch eine Erhöhung der Arbeitsgeschwindigkeit durch höhere Drehzahlen zu.

Bei diesem Zahnradextruder ist es von Vorteil, wenn die Lager der Einzugswalzen durch Verstellmittel verschiebbar sind, um den Einzugsspalt zu verändern.

Dabei können die Verstellmittel z.B. Stellschrauben, motorgetriebene Spindeln oder Kolbenzylindereinheiten, gegebenenfalls in Kombination mit Federn sein.

Dieser erfindungsgemäße Zahnradextruder kann nicht nur für die Verarbeitung von Kautschukmischungsstreifen, sondern auch für Kautschukpellets oder Kunststoffgranulat verwendet werden, wenn auf der Eingangsöffnung des Gehäuses eine Granulatzuführungsvorrichtung angeordnet ist. Auch kleingeschnittene Kautschukschnitzel oder Kunststoffschrott lassen sich mit diesem Zahnradextruder verarbeiten.

Dabei kann die Zuführungsvorrichtung ein mit Gebläse versehener Kanal und/oder ein auf dem Gehäuse angeordneter Trichter sein, der vorzugsweise mit einem Rührwerk oder anderen Fütterhilfen ausgestattet ist.

Um einzuziehendes Material nicht mit der Einzugswalze rundlaufen zu lassen, kann es vorteilhaft sein, daß an der Oberfläche der Einzugswalzen ein Schaber angreift.

Der Zahnradextruder kann auch so aufgebaut sein, daß die Einzugswalzen in gesonderten Gehäuseteilen gelagert sind, die am Gehäuse an Orten angebracht sind, an denen Öffnungen im Gehäuse befindlich sind, durch die die Einzugswalzen hindurchgreifen. Das bringt den Vorteil mit sich, daß durch Abbau des gesonderten Gehäuseteiles die Stelle besonders leicht und schnell zugänglich ist, an der der Streifen vom Zahnrad eingezogen wird und in die Zähne gepreßt wird. Auch bei Einzugswalzen mit gesondertem Antrieb ist diese Bauform von Vorteil, weil sich Störungen durch einen schnellen Austausch des gesonderten Gehäuseteiles beheben lassen.

Das Wesen der Erfindung ist nachstehend anhand von in den Zeichnungen schematisch dargestellten Ausführungsbei beispielen näher erläutert. Es zeigen:
- Fig.1: einen Schnitt durch einen Zahnradextruder, der mit Kautschukmischungsstreifen beschickt wird,
- Fig.2: einen Schnitt durch einen Zahnradextruder, der mit Kautschukpellets oder Kunststoffgranulat beschickt wird.
- Fig.3: einen Schnitt durch einen Zahnradextruder, dessen Einzugswalzen durch Stellmittel in Kombination mit Federn verschiebbar sind und durch Schaber gereinigt werden.
- Fig.4: einen Schnitt durch einen anderen Zahnradextruder mit frei angeordneten Einzugswalzen.
- Fig.5: einen Schnitt durch eine Ausführungsform des Extruders, bei der die Einzugswalzen in gesonderten Gehäuseteilen gelagert sind und durch Ausnehmungen des Gehäuses hindurchgreifen.

Der Zahnradextruder für die Extrusion von Kautschukmischungen und Kunststoffen besteht aus einem Gehäuse 1, in welchem ein Paar von miteinander kämmenden Zahnrädern 2 und zwei Einzugswalzen 3 untergebracht sind und das mit zwei Einzugskanälen 4 und einem Extrusionskanal 5 versehen ist. Die Einzugswalzen 3 sind in Ausnehmungen 6 des Gehäuses 1 an einem Ort angeordnet, an welchem die Zähne der Zahnräder 2 bei ihrem Rundlauf mit der Gehäuseinnenwand 7 einen Einzugsspalt bilden.

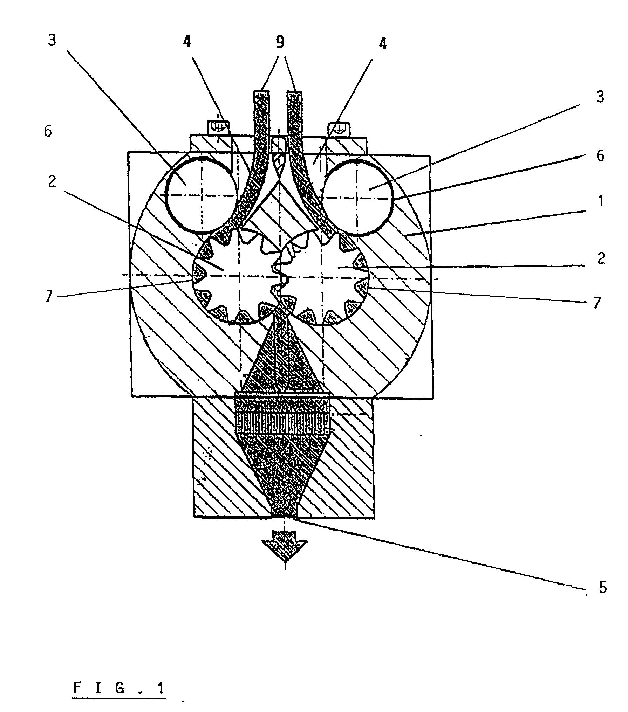

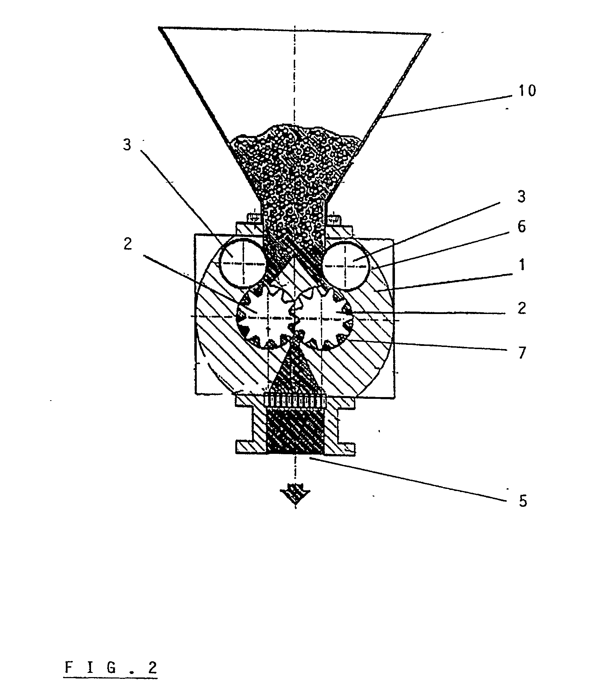

Im Ausführungsbeispiel der Fig.1 werden Kautschukstreifen 9 in den Zahnradextruder eingezogen. Im Ausführungsbeispiel der Fig.2 ist auf der Eingangsöffnung des Gehäuses 1 eine Granulatzuführungsvorrichtung in Form eines Trichters 10 angeordnet.

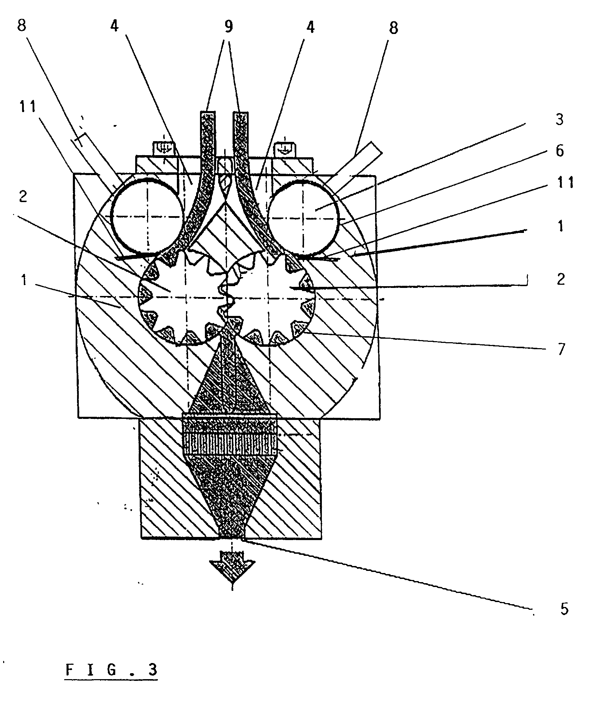

Es ist zweckmäßig, wenn die Lager der Einzugswalzen 3 verschiebbar gelagert und durch Verstellmittel, z.B. Stellschrauben 8 verschiebbar sind, wie es in Fig.3 gezeigt ist.

Bei der Verarbeitung von klebrigem Material kann es zweckmäßig sein, wenn an der Oberfläche der Einzugswalzen 3 ein Schaber 11 angreift, wie es ebenfalls in Fig.3 gezeigt ist.

Eine Möglichkeit der unabhängigen Temperierung von Gehäuse, Zahnrädern und Einzugswalzen ist bei schwer verarbeitbaren Materialien zweckmäßig und vorteilhaft.

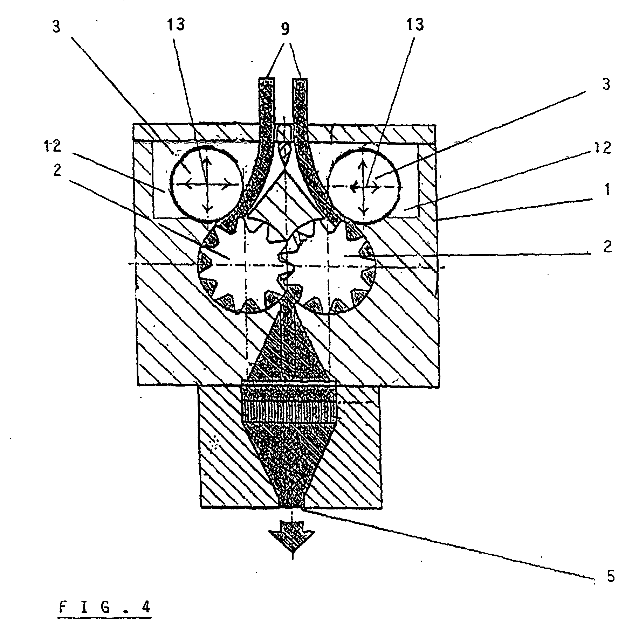

Im Ausführungsbeispiel der Fig.4 sind die Einzugswalzen 3 im oberen Teil des Hohlraumes 12 angeordnet, sie sind entsprechend den Pfeilen 13 verschiebbar. Sie drücken die Streifen 9 in die Zahnlücken der Zahnräder 2,. Die mit dem Material der Streifen 9 gefüllten Zahnlücken bewegen sich durch freien Raum in die jeweils das Zahnrad 2 aufnehmende Ausnehmung des Gehäuses 1. An der Oberfläche 7 dieser Gehäuseausnehmung tritt zunächst nur geringe Reibung auf, wodurch der Reibungswiderstand, der durch die mit den Zahnrädern 2 in Kombination zusammenarbeitenden Einzugswalzen 3 an sich schon erniedrigt ist, weiter herabgesetzt wird.

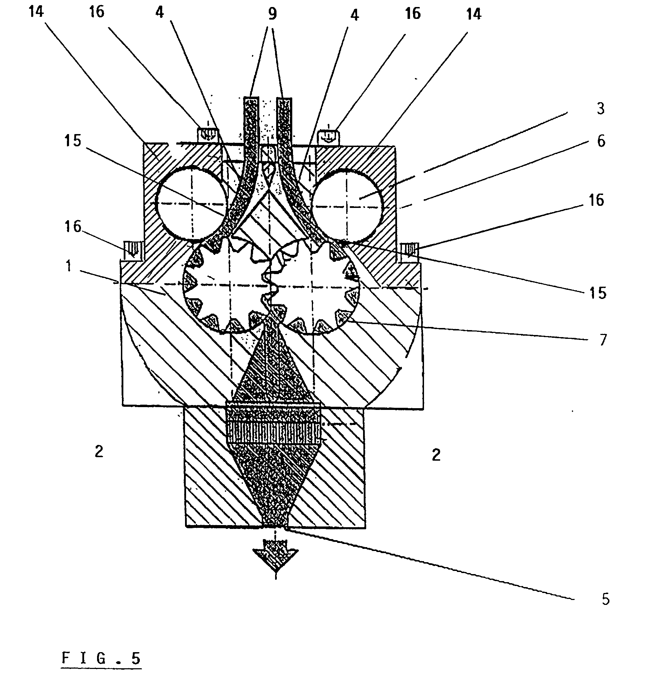

Bei dem Zahnradextruder der Fig.5 sind die Einzugswalzen 3 in Ausnehmungen 6 des Gehäuses 1 angeordnet und in gesonderten Gehäuseteilen 14 gelagert, die am Gehäuse 1 an Orten angebracht sind, an denen Öffnungen 15 im Gehäuse 1 befindlich sind, durch die die Einzugswalzen 3 hindurchgreifen. Diese gesonderten Gehäuseteile 14 sind mittels Befestigungsmitteln in Form von Schrauben 16 am Gehäuse 1 befestigt.

## Patentansprüche

1. Verfahren zur Extrusion von Kautschukmischungen und
Kunststoffen mittels eines Zahnradextruders, bestehend aus einem Gehäuse (1), in welchem ein Paar von miteinander kämmenden Zahnrädern (2) untergebracht ist, das mit einem Einzugskanal (4) und einem Extrusionskanal (5) versehen ist und dem zwei Einzugswalzen (3) zugeordnet sind
dadurch gekennzeichnet,
daß man jedem Zahnrad (2) je einen Einzugskanal (4) und eine Einzugswalze (3) zuordnet,
daß man die Einzugswalzen (3) unmittelbar neben dem Zahnrad (2) und vor der Stelle anordnet, an der die Zähne der Zahnräder (2) entlang der Gehäuseinnenwand (7) laufen, und daß man das zu verarbeitende Gut mittels der Einzugswalzen (3) in die Zahnlücken der Zahnräder (2) einpreßt.

2. Verfahren nach Anspruch 1,
dadurch gekennzeichnet,
daß man zur Erzielung eines in sich beweglichen Materialwulstes vor dem Einzugsspalt des Zahnrades (2) die Einzugswalze (3) mit einer anderen Umfangsgeschwindigkeit als das Zahnrad (2) laufen läßt.

3. Zahnradextruder für die Extrusion von Kautschukmischungen und Kunststoffen,
bestehend aus einem Gehäuse (1), in welchem ein Paar von miteinander kämmenden Zahnrädern (2) und zwei Einzugswalzen (3) untergebracht sind und das mit einem Einzugskanal (4) und einem Extrusionskanal (5) versehen ist, dadurch gekennzeichnet,
daß jedem Zahnrad (2) eine Einzugswalze (3) zugeordnet und unmittelbar so nahe neben diesem Zahnrad (2) angeordnet ist,
daß das zu verarbeitende Gut unter Verringerung des Mitschleppens von Luft in die Zahnlücken der Zahnräder (2) eingepreßt wird,
wobei die Einzugswalzen (3) vor der Stelle angeordnet sind, an der die Zähne der Zahnräder (2) entlang der Gehäuseinnenwand (7) laufen.

4. Zahnradextruder nach Anspruch 3,
dadurch gekennzeichnet,
daß die Einzugswalzen (3) in Ausnehmungen (6) des Gehäuses (1) angeordnet sind.

5. Zahnradextruder nach Anspruch 3,
dadurch gekennzeichnet,
daß die Einzugswalzen (3) in Gehäuseteilen (14) gelagert sind, die am Gehäuse (1) an Orten angebracht sind, an denen Öffnungen (15) im Gehäuse (1) befindlich sind, durch die die Einzugswalzen hindurchgreifen.

6. Zahnradextruder nach Anspruch 3,
dadurch gekennzeichnet,
daß die Lager der Einzugswalzen (3) durch Verstellmittel verschiebbar sind.

7. Zahnradextruder nach Anspruch 3,
dadurch gekennzeichnet,
daß auf der Eingangsöffnung des Gehäuses (1) eine Granulatzuführungsvorrichtung angeordnet ist.

8. Zahnradextruder nach Anspruch 3,
dadurch gekennzeichnet,
daß die Einzugswalzen (3) mit einer gesonderten Antriebsvorrichtung versehen sind.

9. Zahnradextruder nach Anspruch 3,
dadurch gekennzeichnet,
daß die Oberflächen der Einzugswalzen (3) glatt oder schwach angerauht sind.

10. Zahnradextruder nach Anspruch 3,
dadurch gekennzeichnet,
daß an der Oberfläche der Einzugswalzen (3) ein Abstreifer anliegt.

## Claims

1. Method for extrusion of rubber mixtures and plastics by means of a gear extruder consisting of a housing (1) in which a pair of meshing gears (2) are housed and which is provided with an intake channel (4) and an extrusion channel (5) and is associated with two intake rolls (3), characterised in that each gear (2) is associated with an intake channel (4) and an intake roll (3), in that the intake rolls (3) are arranged in the immediate vicinity of the gear (2) and in front of the location in which the teeth of the gears (2) run along the inside wall (7) of the housing, and in that the material to be processed is pressed into the gaps between the teeth of the gears (2) by means of the intake rolls (3).

2. Method according to claim 1, characterised in that the intake roll (3) is run at a different circumferential speed to the gear (2) to form an essentially mobile accumulation of material in front of the intake gap of the gear (2).

3. Gear extruder for extrusion of rubber mixtures and plastics, consisting of a housing (1) in which a pair of meshing gears (2) and two intake rolls (3) are housed and which is provided with an intake channel (4) and an extrusion channel (5), characterised in that each gear (2) is associated with an intake roll (3) and is arranged in the immediate vicinity of this gear (2) so close that the material to be processed is pressed into the gaps between the teeth of the gears (2) with reduced entrainment of air, the intake rolls (3) being arranged in front of the location in which the teeth of the gears (2) run along the inside wall (7) of the housing.

4. Gear extruder according to claim 3, characterised in that the intake rolls (3) are arranged in recesses (6) of the housing (1).

5. Gear extruder according to claim 3, characterised in that the intake rolls (3) are mounted in housing parts (14) which are attached to the housing (1) in locations in which there are openings (15) in the housing (1) through which the intake rolls engage.

6. Gear extruder according to claim 3, characterised in that the mountings of the intake rolls can be moved by adjusting means.

7. Gear extruder according to claim 3, characterised in that a granule feeding device is arranged on the inlet opening of the housing (1).

8. Gear extruder according to claim 3, characterised in that the intake rolls (3) are provided with a separate driving device.

9. Gear extruder according to claim 3, characterised in that the surfaces of the intake rolls (3) are smooth or slightly roughened.

10. Gear extruder according to claim 3, characterised in that a scraper acts on the surface of the intake rolls (3) .

## Revendications

1. Procédé d'extrusion de mélanges de caoutchoucs et de matières synthétiques au moyen d'une extrudeuse à pompe à engrenages, constituée d'un carter (1), dans lequel une paire de roues dentées (2) s'engrenant ensemble est logée, muni d'un canal d'alimentation (4) et d'un, canal d'extrusion (5) et auquel sont associés deux rouleaux d'alimentation (3),
caractérisé en ce que l'on associe, à chaque roue dentée (2), un canal d'alimentation (4) et un rouleau d'alimentation (3),
en ce qu'on dispose les rouleaux d'alimentation (3) directement à côté de la roue dentée (2) et avant l'emplacement auquel les dents des roues dentées (2) défilent le long de la paroi intérieure (7) du carter, et en ce qu'on presse le produit à travailler au moyen des rouleaux d'alimentation (3), dans les entredents des roues dentées (2).

2. Procédé selon la revendication 1, caractérisé en ce que, pour obtenir un bourrelet de matériau mobile en soi, avant l'interstice d'alimentation de la roue dentée (2), le rouleau d'alimentation (3) est entraîné à une vitesse périphérique différente de celle de la roue dentée (2).

3. Extrudeuse à pompe à engrenages pour l'extrusion de mélanges de caoutchoucs et de matières synthétiques,
constituée d'un carter (1), dans lequel une paire de roues dentées (2) s'engrènant ensemble et deux rouleaux d'alimentation (3) sont logés, et muni d'un canal d'alimentation (4) et d'un canal d'extrusion (5),
caractérisée
en ce qu'un rouleau d'alimentation (3) est associé à chaque roue dentée (2) et est disposé ainsi à proximité et à côté de cette roue dentée (2),
en ce que le produit à travailler est pressé dans les entredents des roues dentees (2), avec diminution de l'entraînement d'air,
les rouleaux d'alimentation (3) étant disposés en amont de l'endroit auquel les dents des roues dentées (2) défilent le long de la paroi intérieure (7) du carter.

4. Extrudeuse à pompe à engrenages selon la revendication 3, caractérisée en ce que les rouleaux d'alimentation (3) sont disposés dans des évidements (6) du carter (1).

5. Extrudeuse à pompe à engrenages selon la revendication 3, caractérisée en ce que les rouleaux d'alimentation (3) sont montés à rotation dans des parties de carter (14) montées sur le carter (1), en des emplacements auxquels, dans le carter (1), sont ménagées des ouvertures (15) à travers lesquelles pénètrent les rouleaux d'alimentation.

6. Extrudeuse à pompe à engrenages selon la revendication 3, caractérisée en ce que les paliers des rouleaux d'alimentation (3) sont déplaçables à l'aide de moyens de réglage.

7. Extrudeuse à pompe à engrenages selon la revendication 3, caractérisée en ce qu'un dispositif d'amenée de granulat est disposé sur l'ouverture d'entrée du carter (1).

8. Extrudeuse à pompe à engrenages selon la revendication 3, caractérisée en ce que les rouleaux d'alimentation (3) sont munis d'un dispositif d'entraînement séparé.

9. Extrudeuse à pompe à engrenages selon la revendication 3, caractérisée en ce que les surfaces des rouleaux .d'alimentation (3) sont lisses ou faiblement rugueuses.

10. Extrudeuse à pompe à engrenages selon la revendication 3, caractérisée en ce qu'un racleur est plaqué sur la surface des rouleaux d'alimentation (3).
